(19) Europäisches Patentamt
European Patent Office
Office européen des brevets

(11) **EP 1 468 732 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(51) Int Cl.:
***B01J 20/20*** *(2006.01)*       ***B01D 39/20*** *(2006.01)*
***B01J 20/28*** *(2006.01)*       ***A62D 5/00*** *(2006.01)*

(21) Anmeldenummer: **04000925.0**

(22) Anmeldetag: **17.01.2004**

(54) **Adsorptionsfiltermaterial mit hoher Adsorptionskapazität und geringem Durchbruchverhalten**

Adsorbing filter material with high adsorption capacity and low breakthrough property

Materiau filtrant à adsorption ayant une capacité d'adsorption élevée et une propriété de percée basse

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **17.04.2003 DE 10318053**

(43) Veröffentlichungstag der Anmeldung:
**20.10.2004 Patentblatt 2004/43**

(73) Patentinhaber: **Blücher GmbH**
**40699 Erkrath (DE)**

(72) Erfinder:
• **von Blücher, Hasso**
**40699 Erkrath (DE)**
• **Ouvry, Ludovic**
**40239 Düsseldorf (DE)**
• **Kämper, Stefan**
**40878 Ratingen (DE)**
• **Moskopp, Michael**
**41366 Schwalmtal (DE)**
• **de Ruiter, Ernest, Dr.**
**51371 Leverkusen (DE)**
• **Böhringer, Bertram, Dr.**
**42115 Wuppertal (DE)**

(74) Vertreter: **Von Rohr**
**Patentanwälte Partnerschaft**
**Rüttenscheider Straße 62**
**45130 Essen (DE)**

(56) Entgegenhaltungen:
**DE-A1- 4 310 110     US-A- 4 904 343**
**US-A- 5 605 746**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Adsorptionsfiltermaterial bzw. Flächenfiltermaterial nach dem Oberbegriff des Anspruchs 1, welches sich insbesondere zur Herstellung von Schutzmaterialien, wie z. B. Schutzanzügen, insbesondere ABC-Schutzanzügen, Schutzhandschuhen, Schutzabdeckungen und dergleichen, aber auch für andere Anwendungszwecke (z. B. für Luftfilter oder für den medizinischen Bereich) eignet. Weiterer Gegenstand der vorliegenden Erfindung ist die Verwendung bzw. der Einsatz des erfindungsgemäßen Adsorptionsfiltermaterials bzw. Flächenfiltermaterials für die vorgenannten Zwecke.

Es gibt eine Reihe von Stoffen, die von der Haut aufgenommen werden und zu schweren körperlichen Schäden führen. Als Beispiele seien chemische Kampfstoffe, wie z. B. das blasenziehende Lost (Gelbkreuz) und das Nervengift Sarin, erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich gibt es drei Typen von Schutzanzügen: Luft- und wasserdampfundurchlässige Schutzanzüge, die mit einer für chemische Gifte undurchlässigen Gummischicht ausgestattet sind und sehr schnell zu einem Hitzestau beim Träger führen, des weiteren Schutzanzüge, die mit einer Membran ausgestattet sind, welche zwar Wasserdampf, nicht aber die erwähnten Gifte hindurchläßt, und schließlich die permeablen, luft- und wasserdampfdurchlässigen Schutzanzüge, welche den höchsten Tragekomfort bieten.

Hauptsächlich verwendet man luftdurchlässige Materialien. Denn Schutzanzüge gegen chemische Kampfstoffe, die für einen längeren Einsatz unter den verschiedensten Bedingungen gedacht sind, dürfen beim Träger zu keinem Hitzestau führen.

Die luftdurchlässigen, permeablen Schutzanzüge besitzen im allgemeinen eine Adsorptionsschicht auf Basis von Aktivkohle, welche chemische Gifte und Schadstoffe (z. B. chemische Kampfstoffe) sehr dauerhaft binden bzw. adsorbieren kann, so daß auch von stark kontaminierten Anzügen für den Träger keinerlei Gefahr ausgeht. Die Adsorptionsschicht ist dabei im allgemeinen auf einem textilen, insbesondere luftdurchlässigen Trägermaterial fixiert bzw. aufgebracht.

Dabei sind aus dem Stand der Technik verschiedene Ausgestaltungen für die aktivkohlehaltige Adsorptionsschicht derartiger Schutzanzüge bekannt, wobei im allgemeinen ein sandwichartiger bzw. verbundartiger Aufbau aus einer textilen Trägerschicht, einer hiermit verbundenen Adsorptionsschicht und einer daran befestigten Außen- bzw. Abdeckschicht vorliegt. Ein Beispiel dieses Standes der Technik ist US-A-4 904 343.

Zum einen besteht die Möglichkeit, als Adsorbens pulverförmige Aktivkohle zu verwenden, die zusammen mit einem polymeren Bindemittel als Dispersion auf das textile Trägermaterial aufgedruckt werden kann (siehe z. B. EP 0 090 072 A2). Hierbei wird die pulverförmige Aktivkohle jedoch vollständig in das Bindemittel eingebettet und folglich vollständig hiervon umgeben, so daß ihre Oberfläche in bezug auf zu adsorbierende Giftstoffe nicht frei zugänglich ist, sondern die Giftstoffe erst durch das Bindemittel hindurch bis zu der Aktivkohle migrieren bzw. diffundieren müssen, wo sie schließlich adsorbiert werden; dies ist nur wenig effizient. Pulverförmige Aktivkohle hat außerdem eine nur relativ geringe Adsorptions- bzw. Beladungskapazität in bezug auf zu adsorbierende Schad- und Giftstoffe.

Weiter ist es bekannt, bei derartigen Schutzanzügen als Adsorbentien - anstelle von pulverförmiger Aktivkohle - kornförmige oder kugelförmige Aktivkohleteilchen mit mittleren Durchmessern von bis zu ca. 1 mm zu verwenden (siehe z. B. EP 0 118 618 A1). Die aus den Aktivkohlekörnchen bzw. -kügelchen bestehende Adsorptionsschicht ist dabei in den meisten Fällen derart ausgestaltet, daß die Aktivkohlekörnchen bzw. -kügelchen an auf einem textilen Träger aufgedruckte Kleberhäufchen gebunden sind, wobei die Adsorptionsschicht im allgemeinen durch einen "Außenstoff" (d. h. ein Abdeckmaterial) ergänzt werden und an der dem textilen Träger zugewandten Innenseite durch ein leichtes, ebenfalls textiles Material abgedeckt sein kann. Korn- oder kugelförmige Aktivkohle besitzt zwar eine relativ hohe Gesamtadsorptions- bzw. -beladungskapazität, jedoch eine nicht immer ausreichende Adsorptionsgeschwindigkeit bzw. Adsorptionskinetik, so daß es zu Durchbrüchen kommt; letzterem versucht man durch eine größere Beladungsmenge an Aktivkohle zu begegnen, was aber dazu führt, daß die bereitgestellte Gesamtadsorptions- bzw. -beladungskapazität in bezug auf das Filtermaterial bzw. den Schutzanzug überdimensioniert ist. Des weiteren kann unter extremen Bedingungen, beispielsweise wenn ein Tropfen eines eingedickten Giftes aus größerer Höhe auf eine offene Stelle des Außenmaterials auftrifft und bis zur Aktivkohle durchschlägt, die Aktivkohleschicht örtlich kurzzeitig überfordert sein, was dann ebenfalls zu Durchbrüchen führt.

Schließlich ist es bekannt, bei den permeablen, luftdurchlässigen Schutzanzügen der zuvor beschriebenen Art als Adsorbens Aktivkohlefasergewebe, -gewirke oder -vliese zu verwenden, welche auf der einen Seite mittels eines Schmelzklebers flächig mit einer textilen Trägerlage verbunden und auf der der Trägerlage abgewandten Seite mit einem textilen Abdeckmaterial bzw. "Außenmaterial" versehen sind (siehe z. B. DE 195 19 869 C2). Aktivkohlefasern besitzen zwar eine relativ hohe anfängliche Adsorptionsgeschwindigkeit bzw. Adsorptionskinetik, jedoch ist ihre Gesamtadsorptions- bzw. -beladungskapazität, insbesondere im Vergleich zu Aktivkohle in Korn- bzw. Kugelform, oftmals unzureichend, so daß schlimmstenfalls (d. h. bei Einwirkung großer Mengen an Schad-/Giftstoffen) die Adsorptions- bzw. Beladungskapazität des gesamten Schutzanzugs erschöpft sein kann. Des weiteren kann unter extremen Bedingungen (z. B. beim Auftreffen eines Tropfen eines eingedickten Giftes aus größerer Höhe auf eine offene Stelle des Außenmaterials) das Aktivkohlefasergewebe, -gewirke oder - vlies örtlich kurzzeitig überfordert sein, so daß Durchbrüche auftreten können. Schließlich sind Aktivkohlefasergewebe, -gewirke oder -vliese unter Belastung (z. B. beim Tragen des Schutzanzuges) nicht immer ausreichend abriebfest, so daß die Fasern z. B. brechen und Kanäle in der Adsorptionsschicht entstehen können, durch welche dann die zu adsorbierenden Giftstoffe ungehindert durchtreten können.

Es ist daher die Aufgabe der vorliegenden Erfindung, ein Adsorptionsfiltermaterial bzw. Flächenfiltermaterial bereitzustellen, welches die zuvor geschilderten Nachteile - zumindest teilweise - vermeidet.

Eine weitere Aufgabe der vorliegenden Erfindung ist die Bereitstellung eines Adsorptionsfiltermaterials bzw. Flächenfiltermaterials, welches sich insbesondere für die Herstellung von Schutzmaterialien, insbesondere ABC-Schutzmaterialien, wie z. B. Schutzanzügen, Schutzhandschuhen, Schutzabdeckungen und dergleichen, aber auch für andere Anwendungszwecke eignet.

Wiederum eine weitere Aufgabe der vorliegenden Erfindung ist die Bereitstellung eines Adsorptionsfiltermaterials bzw. Flächenfiltermaterials, insbesondere zur Verwendung in Schutzmaterialien, wie z. B. ABC-Schutzmaterialien (z. B. Schutzanzügen, Schutzhandschuhen, Schutzabdeckungen und dergleichen), aber auch für andere Zwecke (z. B. im Bereich der Luftfilter oder für den medizinischen Bereich), welches eine große Adsorptions- bzw. Beladungskapazität und gleichzeitig ein gutes Durchbruchverhalten, insbesondere Anfangsdurchbruchverhalten, aufweist.

Eine weitere Aufgabe der vorliegenden Erfindung ist die Bereitstellung eines Adsorptionsfiltermaterials bzw. Flächenfiltermaterials, insbesondere zur Verwendung in Schutzmaterialien, wie z. B. ABC-Schutzmaterialien (z. B. Schutzanzügen, Schutzhandschuhen, Schutzabdeckungen und dergleichen), welches gleichermaßen einen hohen Tragekomfort gewährleistet.

Das der vorliegenden Erfindung zugrundeliegende Problem wird durch ein Adsorptionsfiltermaterial nach Anspruch 1 gelöst. Weitere, vorteilhafte Ausgestaltungen sind Gegenstand der Unteransprüche.

Es wurde nun überraschend gefunden, daß ein Adsorptionsfiltermaterial (Flächenfiltermaterial), welches die jeweils vorteilhaften Eigenschaften von korn- bzw. kugelförmiger Aktivkohle einerseits und Aktivkohlefasern andererseits in einem einzigen Material vereint, dazu führt, daß das Durchbruchverhalten des Filtermaterials, insbesondere zu Beginn des Adsorptionsvorgang, bei gleichzeitig guter Gesamtadsorptionskapazität verbessert bzw. optimiert werden kann. Gleichermaßen kann auf diese Weise die gewichtsbezogene Gesamtbeladungsmenge an Aktivkohle in dem Filtermaterial gegenüber herkömmlichen Filtermaterialien mit Aktivkohle allein deutlich reduziert werden, weil die erforderliche anfängliche "Adsorptionsspontaneität" und somit das gute Anfangsdurchbruchverhalten des Filtermaterials durch die faserförmige Aktivkohle sichergestellt wird.

Gegenstand der vorliegenden Erfindung ist somit ein Adsorptionsfiltermaterial bzw. Flächenfiltermaterial, insbesondere zur Herstellung von Schutzmaterialien wie ABC-Schutzanzügen, welches

- eine erste Schicht bzw. Lage,

- eine zweite Schicht bzw. Lage und

- eine zwischen der ersten Schicht bzw. Lage und der zweiten Schicht bzw. Lage angeordnete Adsorptionsschicht bzw. -lage, die eine erste Aktivkohleschicht/-lage mit korn- und/oder kugelförmiger Aktivkohle aufweist,

umfaßt,
wobei die Adsorptionsschicht/-lage zusätzlich eine zweite Aktivkohleschicht/-lage mit Aktivkohlefasern aufweist.

Obwohl gemäß einer Ausführungsform der vorliegenden Erfindung die Aktivkohlefasem auch zusammen mit den Aktivkohlekörnern bzw. -kügelchen innerhalb einer einzigen Aktivkohleschicht vorliegen können, ist erfindungsgemäß die Ausfihrungsform bevorzugt, bei der die Adsorptionsschicht/-lage zusätzlich eine zweite Aktivkohleschicht/-lage mit Aktivkohlefasern aufweist, d. h. die Aktivkohlekömer bzw. -kügelchen einerseits und die Aktivkohlefasern andererseits in separaten, jedoch aneinander angrenzenden bzw. miteinander verbundenen Adsorptionsschichten/-lagen vorliegen.

Im folgenden wie auch voranstehend werden die Begriffe "Lage" und "Schicht" synonym gebraucht und bezeichnen erfindungsgemäß nicht nur durchgängige, kontinuierliche, sondern auch unterbrochene, diskontinuierliche Lagen bzw. Schichten.

Die in dem erfindungsgemäßen Adsorptionsfiltermaterial verwendete korn- oder kugelförmige Aktivkohle kann durch Carbonisieren mit nachfolgender Aktivierung geeigneter organischer Ausgangsmaterialien in Korn- bzw. Kugelform hergestellt werden. Beispiele für geeignete Polymere sind beispielsweise divinylbenzolvemetztes Polystyrol. Dieses kann beispielsweise in Form von Ionenaustauschern (z. B. Kationenaustauschern) oder Vorstufen solcher Ionenaustauscher vorliegen. Bei den Ausgangsmaterialien kann es sich beispielsweise auch um poröse, insbesondere makroporöse, oder aber gelförmige Polymerkügelchen oder - körnchen oder aber um Pechkügelchen oder -körnchen handeln. Die Herstellung korn- oder kugelförmiger Aktivkohle ist dem Fachmann bekannt. Beispielsweise kann verwiesen werden auf die EP 0 118 618 A1 und die WO 01/83368 A1 sowie auf H. v. Kienle, E. Bäder, "Aktivkohle und ihre industrielle Anwendung", Ferdinand Enke Verlag, Stuttgart 1980, deren jeweilige Offenbarung hiermit durch Bezugnahme eingeschlossen ist. Anstelle der vorgenannten Aktivkohlen kann auch eine sogenannte Splitterkohle zur Anwendung in dem erfindungsgemäßen Adsorptionsfiltermaterial kommen, wie sie beispielsweise durch Carbonisierung und nachfolgende Aktivierung von Kokosnußschalen erhalten werden kann; der Begriff kornförmige Aktivkohle, wie er erfindungsgemäß verwendet wird, umfaßt auch solche Formen der Aktivkohle.

Erfindungsgemäß geeignete korn- bzw. kugelförmige Aktivkohlepartikel weisen mittlere Teilchendurchmesser von 0,05 bis 1 mm, insbesondere 0, 1 bis 0,8 mm, vorzugsweise 0,1 bis 0,6 mm, auf. Erfindungsgemäß geeignete korn- bzw. kugelförmige Aktivkohlepartikel weisen im allgemeinen eine spezifische innere Oberfläche (BET) von mindestens 800 $m^2$/g, insbesondere mindestens 900 $m^2$/g, vorzugsweise im Bereich von 800 bis 1.500 $m^2$/g, auf.

Was die erfindungsgemäß verwendeten Aktivkohlefasern anbelangt, so werden diese durch Carbonisieren und nachfolgende Aktivierung geeigneter organischer Ausgangsfasern hergestellt, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und Hanffasern. Vorzugsweise werden erfindungsgemäß carbonisierte und aktivierte Fasern auf Basis von Cellulose und Cellulosederivaten eingesetzt.

Die Herstellung derartiger Aktivkohlefasern ist dem Fachmann bekannt. In diesem Zusammenhang kann beispielsweise verwiesen werden auf die DE 195 19 869 A1, die GB-PS 1 310 011, die DE 33 39 756 C2, die WO 01/70372 A1 sowie die EP 0 966 558 A2 bzw. deren Äquivalent DE 698 09 718 T2, wobei der gesamte Offenbarungsgehalt der zuvor genannten Druckschriften hiermit durch Bezugnahme eingeschlossen ist.

Erfindungsgemäß besonders bevorzugte Fasern erhält man nach dem Verfahren gemäß der EP 0 966 558 A2 bzw. der DE 698 09 718 T2. Nach diesem Verfahren wird ein Fasergefüge aus einem Kohlenstoffvorläufermaterial auf Basis von Cellulose (z. B. Kunstseide, Florettseide, Solvatcellulosen, Baumwolle, Stengelfasern) mit einer Zusammensetzung imprägniert, die mindestens einen mineralischen Bestandteil (z. B. Phosphorsäure, Schwefelsäure, Salzsäure etc.) enthält, der eine Promotorwirkung für die Dehydratisierung der Cellulose hat, und anschließend das so imprägnierte Fasergefüge einer thermischen Behandlung bei einer Temperatur ausgesetzt, die ausreichend ist, um die Umwandlung des Vorläufers aus Cellulose im wesentlichen in Kohlenstoff hervorzurufen, wobei die thermische Behandlung in inerter oder teilweiser oxidierender Atmosphäre durchgeführt wird und in einem Temperaturanstieg mit einer mittleren Geschwindigkeit zwischen 1 und 15 °C/min, gefolgt von einer Stufe bei einer Temperatur zwischen 350 °C und 500 °C, besteht, und gefolgt wird von einem Entfernungsschritt von Restphasen der Imprägnierungszusammensetzung und von Abbauprodukten des Cellulosematerials durch Waschen.

Das erfindungsgemäß verwendete Aktivkohlefasermaterial, insbesondere die zweite Aktivkohleschicht, liegt vorzugsweise als textiles Aktivkohlefasergebilde vor. Beispiele hierfür sind Gewebe, Gewirke, Gestricke, Gelege, Gewirre, Vliese, Filze oder sonstige Textilverbundstoffe. Vorzugsweise sind hier Nonwoven-Materialien zu nennen, wie Vliese, Filze, Gelege (z. B. multidirektionale Gelege), daneben aber auch Gewebe. Ein erfindungsgemäß bevorzugtes Nonwoven-Material ist beispielsweise derart ausgebildet, daß die Aktivkohlefasern (Kohlenstoffasern) mit thermoplastischen, klebrig wirkenden Bikomponentenfasern zusammen ein Aktivkohlefasergefüge bilden, wobei der Gehalt an thermoplastischen Bikomponentenfasern 50 Gew.-%, bezogen auf das Gefüge, nicht überschreiten sollte.

Erfindungsgemäß verwendbare, textile Aktivkohlefasergebilde haben im allgemeinen ein Flächengewicht von 10 bis 200 g/$m^2$, insbesondere 10 bis 150 g/$m^2$, vorzugsweise 10 bis 120 g/$m^2$, besonders bevorzugt 20 bis 100 g/$m^2$, ganz besonders bevorzugt 25 bis 80 g/$m^2$.

Die erfindungsgemäß eingesetzten Aktivkohlefasern haben insbesondere mittlere Faserdurchmesser im Bereich von 1 bis 25 $\mu$m, insbesondere 2,5 bis 20 $\mu$m, vorzugsweise 5 bis 15 $\mu$m. Ihre längenbezogene Masse (Titer) liegt im allgemeinen im Bereich von 1 bis 10 dtex, insbesondere 1 bis 5 dtex.

Um ein optimales Verhältnis von Adsorptionskapazität einerseits und Durchbruchverhalten andererseits des erfindungsgemäßen Adsorptionsmaterials zu erhalten, sollte das Verhältnis des mittleren Teilchendurchmessers der korn- bzw. kugelförmigen Aktivkohlepartikel zum mittleren Faserdurchmesser der Aktivkohlefasern in einem bestimmten Bereich ausgewählt sein. Besonders gute Ergebnisse werden erhalten, wenn der mittlere Teilchendurchmesser der korn- bzw. kugelförmigen Aktivkohlepartikel $\left( \overline{d}_{\text{Aktivkohlepartikel}} \right)$ mindestens um das Dreifache, insbesondere mindestens um das Vierfache, vorzugsweise mindestens um das Fünffache, besonders bevorzugt mindestens um das Sechsfache, größer ist als der mittlere Faserdurchmesser der Aktivkohlefasern $\left( \overline{d}_{\text{Aktivkohlefaser}} \right)$. Somit gilt gemäß einer bevorzugten Ausführungsform:

$$\overline{d}_{\text{Aktivkohlepartikel}} / \overline{d}_{\text{Aktivkohlefaser}} > 3,$$

insbesondere > 4, vorzugsweise > 5, besonders bevorzugt > 6 oder mehr.

Die gesamte Aktivkohlemenge (d. h. Aktivkohlekörner/-kugeln plus Aktivkohlefasern), bezogen auf das erfindungsgemäße Adsorptionsfiltermaterial, kann in weiten Grenzen variieren. Im allgemeinen beträgt sie 25 bis 300 g/$m^2$, insbesondere 30 bis 250 g/$m^2$, vorzugsweise 50 bis 250 g/$m^2$, besonders bevorzugt 60 bis 220 g/$m^2$.

Die erste Aktivkohleschicht mit der korn- bzw. kugelförmigen Aktivkohle und die zweite Aktivkohleschicht mit den Aktivkohlefaserns sind unmittelbar aneinander angrenzend bzw. unmittelbar übereinander angeordnet. Erfindungsgemäß bevorzugt ist es, wenn die erste Aktivkohleschicht und die zweite Aktivkohleschicht dauerhaft miteinander verbunden, insbesondere nahtlos verbunden, vorzugsweise verklebt, sind und einen Verbund bilden.

Je nach Anwendung ist es möglich, die korn- bzw. kugelförmige Aktivkohle und/oder die Aktivkohlefasern mit mindestens einem Katalysator zu imprägnieren. Der Katalysator kann beispielsweise ausgewählt sein aus Metallen und Metallverbindungen (z. B. von Übergangsmetallen, insbesondere Edelmetallen). Vorzugsweise ist der Katalysator ausgewählt aus der Gruppe von Kupfer, Cadmium, Silber, Platin, Palladium, Zink und Quecksilber sowie deren Verbindungen. Die Menge an Katalysator, bezogen auf das imprägnierte Aktivkohlematerial, kann in weiten Grenzen variieren; im allgemeinen liegt sie im Bereich von 0,01 bis 15 Gew.-%, insbesondere 0,05 bis 12 Gew.-%, vorzugsweise 5 bis 12 Gew.-%. Die Imprägnierung der Aktivkohle mit Katalysatoren ist aus dem Stand der Technik bekannt. Für weitere Einzelheiten kann beispielsweise verwiesen werden auf die zuvor zitierte Literaturstelle von H. v. Kienle, E. Bäder, "Aktivkohle und ihre industrielle Anwendung", Ferdinand Enke Verlag, Stuttgart 1980, sowie die DE 195 19 869 A1.

Bei den beiden äußeren Schichten des erfindungsgemäßen Adsorptionsmaterials handelt es sich insbesondere um vorzugsweise luftdurchlässige Textilmaterialien, insbesondere textile Flächengebilde, wie Gewebe, Gewirke, Gestricke, Gelege, Gewirre, Vliese, Filze oder sonstige Textilverbundstoffe. Das Textilmaterial hat im allgemeinen ein Flächengewicht von 50 bis 300 g/m$^2$, insbesondere 75 bis 250 g/m$^2$, vorzugsweise 90 bis 175 g/m$^2$. Gemäß einer besonderen Ausführungsform kann es vorgesehen sein, eine der beiden Außenschichten oder aber auch beide Außenschichten oleophob auszustatten. Dies hat den Vorteil, daß die zumeist organischen Giftstoffe von der Oberfläche der Außenschicht(en) abgewiesen werden und nicht ins Gewebe eindringen können.

Die beiden Außenschichten dienen im allgemeinen als Trägerschicht für die Adsorptionsschicht. Es liegt somit ein sandwichartiger Aufbau des erfindungsgemäßen Adsorptionsfiltermaterials vor.

Insbesondere kann es vorgesehen sein, daß die erste Schicht und die zweite Aktivkohleschicht als Trägerschicht für die erste Aktivkohleschicht dienen bzw. daß die zweite Schicht und die erste Aktivkohleschicht als Trägerschicht für die zweite Aktivkohleschicht dienen.

Auf diese Weise wird ein Adsorptionsfiltermaterial bereitgestellt, daß als mehrschichtiges, insbesondere luftdurchlässiges Verbundmaterial aus mehreren, jeweils miteinander verbundenen Schichten ausgebildet ist, wobei die einzelnen Schichten des erfindungsgemäßen Adsorptionsfiltermaterials jeweils miteinander verbunden sind, insbesondere nahtlos, vorzugsweise durch Verkleben; der Klebstoffauftrag zum dauerhaften und nahtlosen Verbinden von jeweils zwei Schichten erfolgt im allgemeinen in einer Menge von 5 bis 100 g/m$^2$, insbesondere 5 bis 75 g/m$^2$, vorzugsweise 10 bis 50 g/m$^2$. Dabei können die für diese Zwecke aus dem Stand der Technik bekannten Auftragungsarten und Klebstoffe verwendet werden. Beispielsweise kann die Verklebung durch einen vollflächigen oder punktförmigen (z. B. punktrasterförmigen) Klebstoffauftrag erfolgen. Geeignet sind auch Schmelzklebervliese. Als Klebstoffe können ferner reaktive Schmelzkleber (z. B. auf Polyurethanbasis) dienen. Die Befestigung der korn- bzw. kugelförmigen Aktivkohle kann beispielsweise dadurch erfolgen, daß auf die jeweilige Trägerschicht, d. h. die erste Außenschicht bzw. die zweite Aktivkohleschicht, Kleberhäufchen als punktförmiges Raster aufgetragen werden, an denen die Aktivkohlekugeln bzw. -körner dann befestigt werden. Die Verklebung als solche ist dem Fachmann geläufig.

Was das erfindungsgemäße Adsorptionsfiltermaterial als solches anbelangt, so besitzt dieses ein resultierendes Gesamtflächengewicht, bezogen auf das Adsorptionsfiltermaterial, von 75 bis 1.000 g/m$^2$, insbesondere 100 bis 800 g/m$^2$, vorzugsweise 125 bis 500 g/m$^2$. Vorzugsweise ist das erfindungsgemäße Adsorptionsfiltermaterial gas- bzw. luftdurchlässig ausgebildet; die Gas- bzw. Luftdurchlässigkeit des erfindungsgemäßen Adsorptionsfiltermaterials beträgt dabei vorzugsweise mehr als 50 l·m$^{-2}$·s$^{-1}$, insbesondere mehr als 100 l·m$^{-2}$·s$^{-1}$, vorzugsweise mehr als 200 l·m$^{2}$·s$^{-1}$, und kann bis zu 10.000 l·m$^{-2}$·s$^{-1}$ betragen. Vorzugsweise besitzt das erfindungsgemäße Adsorptionsfiltermaterial eine Wasserdampfdurchgangsrate von mindestens 5 l/m$^2$ pro 24 h, insbesondere mindestens 10l/m$^2$ pro 24 h, vorzugsweise mindestens 12 l/m$^2$ pro 24 h.

Im allgemeinen ist das erfindungsgemäße Adsorptionsfiltermaterial waschbar und folglich dekontaminierbar bzw. regenerierbar ausgebildet. Für diese Zwecke ist das erfindungsgemäße Adsorptionsfiltermaterial im allgemeinen thermisch stabil, insbesondere bis zu Temperaturen von 100 °C oder mehr, vorzugsweise bis zu Temperaturen von 150 °C oder mehr.

Gemäß einer besonderen Ausführungsform kann es vorgesehen sein, daß zwischen der ersten Schicht und der Adsorptionsschicht und/oder zwischen der zweiten Schicht und der Adsorptionschicht zusätzlich eine im allgemeinen wasserdampfdurchlässige, zumindest im wesentlichen gas- bzw. luftundurchlässige Sperrsicht vorgesehen ist. Es resultiert dann ein zwar gas- bzw. luftundurchlässiges, aber wasserdampfdurchlässiges Adsorptionsfiltermaterial nach der vorliegenden Erfindung. Diese Ausführungsform wird im folgenden noch anhand eines Ausführungsbeispiels näher beschrieben.

Im folgenden wird die Erfindung anhand einer lediglich ein Ausführungsbeispiel darstellenden Zeichnung näher erläutert. In der Zeichnung zeigt

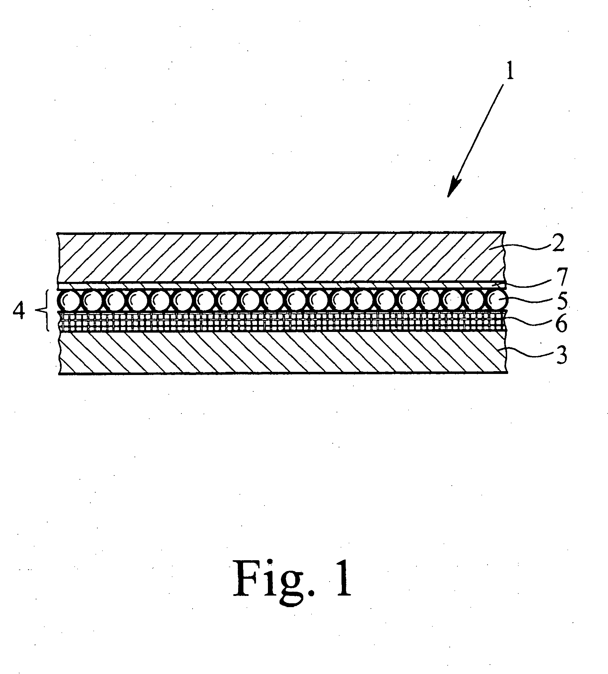

Fig. 1     eine Schnittansicht des erfindungsgemäßen Adsorptionsfiltermaterials.

Die einzige Figur, Fig. 1, zeigt ein erfindungsgemäßes Adsorptionsfiltermaterial 1 mit einer ersten, textilen und vorzugsweise luftdurchlässigen Schicht 2, einer zweiten, textilen und vorzugsweise luftdurchlässigen Schicht 3 und einer zwischen der ersten Schicht 2 und der zweiten Schicht 3 angeordneten Adsorptionsschicht 4. Die Adsorptionsschicht umfaßt eine erste Aktivkohleschicht 5 mit korn- bzw. kugelförmiger Aktivkohle und hieran unmittelbar angrenzend bzw. hieran befestigt eine zweite Aktivkohleschicht 6 mit Aktivkohlefasern, welche vorzugsweise in Form eines Aktivkohlefaserflächengebildes vorliegen, vorzugsweise in Form eines Nonwovens-Materials.

Zwischen der Adsorptionsschicht 4 bzw. der ersten Aktivkohleschicht 5 und der ersten Schicht 2 kann zusätzlich eine Sperrschicht 7 vorgesehen sein, die im allgemeinen wasserdampfdurchlässig und zumindest im wesentlichen gas- bzw. luftundurchlässig ausgebildet ist. Diese Sperrschicht 7 ist in bezug auf zu adsorbierende chemische Gifte, insbesondere Kampfstoffe, wie Hautgifte, zumindest im wesentlichen undurchlässig oder aber kann deren Durchtritt zumindest verzögern. Des weiteren sollte die Sperrschicht 7 auch gegenüber Flüssigkeiten, insbesondere Wasser, bzw. gegenüber Aerosolen (z. B. chemische und/oder biologische Kampfstoffe) zumindest im wesentlichen undurchlässig sein bzw. deren Durchtritt zumindest verzögern. Die Sperrschicht 7 kann als kontinuierliche, geschlossene Schicht auf die erste Schicht 2 aufgetragen sein und gleichzeitig als Haftmasse für die Adsorptionsschicht 4 bzw. die erste Aktivkohleschicht 5 dienen. Beispiele für geeignete Sperrschichtmaterialien sind geeignete Polymere oder Kunststoffe, wie z. B. Polyurethan bzw. Polyurethanderivate oder Cellulose bzw. Cellulosederivate oder gegebenenfalls modifizierte Polyester oder Polyamide. Im allgemeinen wird die Sperrschicht 7, sofern vorhanden, in einer Dicke von 1 bis 1.000 $\mu$m, insbesondere 1 bis 500 $\mu$m, vorzugsweise 5 bis 250 $\mu$m, bevorzugt 5 bis 150 $\mu$m, besonders bevorzugt 10 bis 100 $\mu$m, ganz besonders bevorzugt 10 bis 50 $\mu$m, aufgetragen. Im allgemeinen sollte die Sperrschicht 7, falls vorhanden, bei 25 °C einer Wasserdampfdurchlässigkeit von mindestens 20 l/m$^2$ pro 24 h bei einer Dicke von 50 $\mu$m aufweisen.

Das in Fig. 1 dargestellte erfindungsgemäße Adsorptionsfiltermaterial 1 ist als Verbundmaterial aus mehreren unmittelbar aufeinanderfolgenden, miteinander verbundenen Schichten (2, 3, 4, 5, 6, 7) ausgebildet, wobei diese Schichten untereinander durch nahtloses Verbinden, vorzugsweise Verkleben, dauerhaft miteinander verbunden sind. Das Verkleben der einzelnen Schichten kann mit einem geeigneten Klebstoff, vorzugsweise einem Schmelzklebstoff, insbesondere einem reaktiven Schmelzklebstoff (z. B. auf Polyurethanbasis), mit Schmelzklebervliesen, mit Schaumstrichen aus Polyurethanschaumstoff oder auf jede sonst bekannte Art und Weise geschehen. Die Herstellung von Filterverbundmaterialien ist dem Fachmann an sich bekannt. Hier wird er auf sein allgemeines Fachwissen zurückgreifen.

Das erfindungsgemäße Adsorptionsfiltermaterial eignet sich zur Herstellung von Schutzmaterialien aller Art, insbesondere von Schutzanzügen (sowohl für den zivilen als auch für den militärischen Bereich), von Schutzhandschuhen und von Schutzabdeckungen, vorzugsweise alle vorgenannten Schutzmaterialien für den ABC-Einsatz. Weiterhin eignet sich das erfindungsgemäße Adsorptionsfiltermaterial auch für die Herstellung von Filtern und Filtermatten aller Art, insbesondere zur Entfernung von Schad-, Geruchs- und Giftstoffen aus Luft- und/oder Gasströmen, wie Gasmaskenfiltern, Geruchsfiltern, Flächenfiltern, Luftfiltern, insbesondere Filtern für die Raumluftreinigung, adsorptionsfähigen Trägerstrukturen und Filtern bzw. Filtermaterialien für den medizinischen Bereich.

Erfindungsgemäß wird das Adsorptionsfiltermaterial nach der vorliegenden Erfindung vorzugsweise derart verwendet, daß, von der Anströmrichtung her betrachtet, der Luftstrom - nach Passieren der ersten Schicht ("Außenschicht") - zunächst auf die Adsorptionsschicht mit korn- bzw. kugelförmiger Aktivkohle, anschließend auf die Aktivkohleschicht mit Aktivkohlefasern trifft.

Weiterer Gegenstand der vorliegenden Erfindung sind auch die mit dem erfindungsgemäßen Adsorptionsfiltermaterial hergestellten Schutzmaterialien selbst.

Schließlich ist ein weiterer Gegenstand der vorliegenden Erfindung ein Verfahren zur Verbesserung des Durchbruchverhaltens eines wie zuvor beschriebenen Adsorptionsfiltermaterials durch Verwendung von Aktivkohle sowohl in Form von Körnern bzw. Kugeln einerseits und Fasern andererseits.

Mit dem erfindungsgemäßen Adsorptionsfiltermaterial wird ein leistungsfähiges Material bereitgestellt, welches die Eigenschaften einer hohen Adsorptionskapazität einerseits und eines guten Durchbruchverhaltens andererseits in einem einzigen Material miteinander vereint. Gleichzeitig ermöglicht das erfindungsgemäße Adsorptionsfiltermaterial eine deutliche Reduzierung der Gesamtbeladungsmenge mit Aktivkohle, da das Durchbruchverhalten bzw. die Anfangsspontaneität durch die Aktivkohlefasern gewährleistet wird. Dadurch kann das Flächengewicht des erfindungsgemäßen Adsorptionsfiltermaterials gegenüber aus dem Stand der Technik bekannten Materialien nicht unerheblich reduziert werden.

Durch die Verbesserung des Spontaneitätsverhaltens wird bei dem erfindungsgemäßen Adsorptionsfiltermaterial der besonders wichtige Anfangsdurchbruch von Schad- bzw. Giftstoffen deutlich reduziert.

Je nach Anwendungserfordernis wird ein Adsorptionsfiltermaterial bereitgestellt, welches neben einer hohen Wasserdampfdurchlässigkeit entweder luftdurchlässig (bei Nichtvorhandensein einer Sperrschicht) oder aber luftundurchlässig (bei Vorhandensein einer Sperrschicht) ausgebildet werden kann. Die Waschbarkeit des erfindungsgemäßen Adsorptionsfiltermaterials ermöglicht darüber hinaus eine gute Dekontaminierbarkeit bzw. Regenerierbarkeit.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Ansprüche verläßt.

**Patentansprüche**

1. Adsorptionsfiltermaterial (1), insbesondere zur Herstellung von Schutzmaterialien wie ABC-Schutzanzügen, mit einer ersten Schicht (2), einer zweiten Schicht (3) und einer zwischen der ersten Schicht (2) und der zweiten Schicht (3) angeordneten Adsorptionsschicht (4), wobei die Adsorptionsschicht (4) eine erste Aktivkohleschicht (5) mit korn- und/oder kugelförmiger Aktivkohle aufweist, **dadurch gekennzeichnet, daß** die Adsorptionsschicht (4) zusätzlich eine zweite Aktivkohleschicht (6) mit Aktivkohlefasern aufweist, wobei die zweite Aktivkohleschicht (6) als textiles Aktivkohlefasergebilde vorliegt und wobei die erste Aktivkohleschicht (5) und die zweite Aktivkohleschicht (6) unmittelbar aneinander angrenzend sind und/oder unmittelbar übereinander angeordnet sind.

2. Adsorptionsfiltermaterial nach Anspruch 1, **dadurch gekennzeichnet, daß** die korn- oder kugelförmige Aktivkohle hergestellt ist durch Carbonisieren und nachfolgende Aktivierung geeigneter organischer Ausgangsmaterialien in Korn- oder in Kugelform, insbesondere von geeigneten Polymeren, wie divinylbenzolvernetztes Polystyrol, insbesondere in Form von Ionenaustauschern oder deren Vorstufen, oder aber von Pechen, und/oder daß die korn- und/oder kugelförmigen Aktivkohlepartikel mittlere Teilchendurchmesser von 0,05 bis 1 mm, insbesondere 0,1 bis 0,8 mm, vorzugsweise 0,1 bis 0,6 mm, aufweisen und/oder daß die korn- und/oder kugelförmigen Aktivkohlepartikel eine spezifische innere Oberfläche (BET) von mindestens 800 $m^2$/g, insbesondere mindestens 900 $m^2$/g, vorzugsweise im Bereich von 800 bis 1.500 $m^2$/g, aufweisen.

3. Adsorptionsfiltermaterial nach Anspruch 1 oder 2, **dadurch gekennzeichnet, daß** die Aktivkohlefasern hergestellt sind durch Carbonisieren und nachfolgende Aktivierung geeigneter organischer Ausgangsfasern, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern, vorzugsweise von Fasern auf Basis von Cellulose und Cellulosederivaten und/oder daß das textile Aktivkohlefasergebilde ein Flächengewicht von 10 bis 200 g/$m^2$, insbesondere 10 bis 150 g/$m^2$, vorzugsweise 10 bis 120 g/$m^2$, besonders bevorzugt 20 bis 100 g/$m^2$, ganz besonders bevorzugt 25 bis 80 g/$m^2$, aufweist.

4. Adsorptionsfiltermaterial nach einem der vorangehenden Ansprüche, **dadurch gekennzeichnet, daß** die Aktivkohlefasern mittlere Faserdurchmesser von 1 bis 25 $\mu$m, insbesondere 2,5 bis 20 $\mu$m, vorzugsweise 5 bis 15 $\mu$m, aufweisen und/oder daß die Aktivkohlefasern eine längenbezogene Masse (Titer) von 1 bis 10 dtex, insbesondere 1 bis 5 dtex, aufweisen.

5. Adsorptionsfiltermaterial nach einem der vorangehenden Ansprüche, **dadurch gekennzeichnet, daß** der mittlere Teilchendurchmesser der korn- und/oder kugelförmigen Aktivkohlepartikel mindestens um das Dreifache, insbesondere mindestens um das Vierfache, vorzugsweise mindestens um das Fünffache, besonders bevorzugt mindestens um das Sechsfache, größer ist als der mittlere Faserdurchmesser der Aktivkohlefasern.

6. Adsorptionsfiltermaterial nach einem der vorangehenden Ansprüche, **dadurch gekennzeichnet, daß** die gesamte Aktivkohlemenge, bezogen auf das Adsorptionsfiltermaterial (1), 25 bis 300 g/$m^2$, insbesondere 30 bis 250 g/$m^2$, vorzugsweise 50 bis 250 g/$m^2$, besonders bevorzugt 60 bis 220 g/$m^2$, beträgt.

7. Adsorptionsfiltermaterial nach einem der vorangehenden Ansprüche, **dadurch gekennzeichnet, daß** die erste Aktivkohleschicht (5) und die zweite Aktivkohleschicht (6) dauerhaft miteinander verbunden, insbesondere verklebt sind und/oder daß die erste Aktivkohleschicht (5) und die zweite Aktivkohleschicht (6) einen Verbund bilden.

8. Adsorptionsfiltermaterial nach einem der vorangehenden Ansprüche, **dadurch gekennzeichnet, daß** die korn- und/oder kugelförmige Aktivkohle und/oder die Aktivkohlefasern mit mindestens einem Katalysator imprägniert ist/sind, insbesondere wobei der Katalysator ausgewählt sein kann aus Metallen und Metallverbindungen, vorzugsweise aus der Gruppe von Kupfer, Cadmium, Silber, Platin, Palladium, Zink und Quecksilber sowie deren Verbindungen, und/oder insbesondere wobei die Menge an Katalysator, bezogen auf das imprägnierte Aktivkohlematerial, 0,01 bis 15 Gew.-%, insbesondere 0,05 bis 12 Gew.-%, vorzugsweise 5 bis 12 Gew.-%, beträgt.

9. Adsorptionsfiltermaterial nach einem der vorangehenden Ansprüche, **dadurch gekennzeichnet, daß** die erste Schicht (2) und/oder die zweite Schicht (3) als vorzugsweise luftdurchlässiges Textilmaterial, insbesondere als textiles Flächengebilde, vorzugsweise als Gewebe, Gewirke, Gestricke, Gelege, Gewirre, Vlies, Filz oder sonstiger Textilverbundstoff, ausgebildet ist, insbesondere wobei das Textilmaterial ein Flächengewicht von 50 bis 300 g/m², insbesondere 75 bis 250 g/m², vorzugsweise 90 bis 175 g/m², aufweist, und/oder daß die erste Schicht (2) und/oder die zweite Schicht (3) oleophobiert ist/sind.

10. Adsorptionsfiltermaterial nach einem der vorangehenden Ansprüche, **dadurch gekennzeichnet, daß** das Adsorptionsfiltermaterial (1) als mehrschichtiges, insbesondere luftdurchlässiges Verbundmaterial aus mehreren, jeweils miteinander verbundenen Schichten (2, 3, 4, 5, 6) ausgebildet ist und/oder daß die einzelnen Schichten (2, 3, 4, 5, 6) des Adsorptionsfiltermaterials (1) jeweils miteinander verbunden sind, insbesondere nahtlos, vorzugsweise durch Verkleben, insbesondere wobei der Klebstoffauftrag zum dauerhaften und nahtlosen Verbinden von jeweils zwei Schichten in einer Menge von 5 bis 100 g/m², insbesondere 5 bis 75 g/m², vorzugsweise 10 bis 50 g/m², erfolgt.

11. Adsorptionsfiltermaterial nach einem der vorangehenden Ansprüche, **dadurch gekennzeichnet, daß** das Adsorptionsfiltermaterial (1) ein Gesamtflächengewicht, bezogen auf das Adsorptionsfiltermaterial (1), von 75 bis 1.000 g/m², insbesondere 100 bis 800 g/m², vorzugsweise 125 bis 500 g/m², aufweist und/oder daß das Adsorptionsfiltermaterial (1) gas-, insbesondere luftdurchlässig ist, insbesondere wobei die Gas- bzw. Luftdurchlässigkeit des Adsorptionsfiltermaterials (1) mehr als 50 $1 \cdot m^{-2} \cdot s^{-1}$, insbesondere mehr als 100 $1 \cdot m^{-2} \cdot s^{-1}$, vorzugsweise mehr als 200 $1 \cdot m^{-2} \cdot s^{-1}$, und bis zu 10.000 $1 \cdot m^{-2} \cdot s^{-1}$ beträgt und/oder daß das Adsorptionsfiltermaterial (1) eine Wasserdampfdurchgangsrate von mindestens 5 $1/m^2$ pro 24 h, insbesondere mindestens 10 $1/m^2$ pro 24 h, vorzugsweise mindestens 12 $1/m^2$ pro 24 h, aufweist.

12. Adsorptionsfiltermaterial nach einem der vorangehenden Ansprüche, **dadurch gekennzeichnet, daß** zwischen der ersten Schicht (2) und der Adsorptionsschicht (4) und/oder zwischen der zweiten Schicht (3) und der Adsorptionsschicht (4) zusätzlich mindestens eine Sperrschicht (7) vorgesehen ist, insbesondere wobei die Sperrschicht (7) wasserdampfdurchlässig und/oder zumindest im wesentlichen gas-, insbesondere luftundurchlässig ausgebildet ist und/oder insbesondere wobei die Sperrschicht (7) in bezug auf chemische Gifte, insbesondere Kampfstoffe, wie Haut- wie Kontaktgifte, zumindest im wesentlichen undurchlässig ist oder aber deren Durchtritt zumindest verzögert und/oder insbesondere wobei die Sperrschicht (7) gegenüber Flüssigkeiten, insbesondere Wasser, und/oder gegenüber Aerosolen zumindest im wesentlichen undurchlässig ist oder deren Durchtritt zumindest verzögert.

13. Adsorptionsfiltermaterial nach Anspruch 12, **dadurch gekennzeichnet, daß** die Sperrschicht (7) gleichzeitig als Haftmasse für die Adsorptionsschicht (4) dient und/oder daß die Sperrschicht (7) als kontinuierliche, geschlossene Schicht auf die erste Schicht (2) und/oder auf die zweite Schicht (3) aufgetragen ist und/oder daß die Dicke der Sperrschicht (7) 1 bis 1.000 $\mu$m, insbesondere 1 bis 500 $\mu$m, vorzugsweise 5 bis 250 $\mu$m, bevorzugt 5 bis 150 $\mu$m, besonders bevorzugt 10 bis 100 $\mu$m, ganz besonders bevorzugt 10 bis 50 $\mu$m, beträgt.

14. Adsorptionsfiltermaterial nach Anspruch 12 oder 13, **dadurch gekennzeichnet, daß** die Sperrschicht (7) mindestens einen Kunststoff oder mindestens ein organisches Polymer, vorzugsweise ein Polymer auf Basis von Polyurethan und/oder Polyurethanderivaten und/oder Cellulose und/oder Cellulosederivaten und/oder gegebenenfalls modifizierten oder derivatisierten Polyestern oder Polyamiden, umfaßt oder hieraus besteht und/oder daß die Sperrschicht (7) als ein mehrschichtiges Laminat und/oder als ein mehrschichtiger Verbund aus mehreren Kunststoff- oder Polymerschichten ausgebildet ist, insbesondere aus mindestens drei miteinander verbundenen Schichten oder Lagen, und/oder daß die Sperrschicht (7) bei 25 °C eine Wasserdampfdurchlässigkeit von mindestens 20 $1/m^2$ pro 24 h bei einer Dicke von 50 $\mu$m aufweist.

15. Adsorptionsfiltermaterial nach einem der Ansprüche 12 bis 14, **dadurch gekennzeichnet, daß** das mit der Sperrschicht (7) ausgestattete Adsorptionsfiltermaterial (1) insgesamt eine Wasserdampfdurchlässigkeit von mindestens 10 $1/m^2$ pro 24 h, insbesondere mindestens 15 $1/m^2$ pro 24 h, vorzugsweise mindestens 20 $1/m^2$ pro 24 h, bei einer Dicke der Sperrschicht (7) von 50 $\mu$m aufweist.

16. Adsorptionsfiltermaterial nach einem der vorangehenden Ansprüche, **dadurch gekennzeichnet, daß** es als Verbundmaterial mit mehreren, unmittelbar aufeinanderfolgenden, jeweils miteinander verbundenen Schichten (2, 3, 4, 5, 6) ausgebildet ist, insbesondere wobei das Adsorptionsfiltermaterial (1) diese Schichten in der folgenden Abfolge (Reihenfolge) umfaßt:

    - eine erste, vorzugsweise textile Schicht (2), welche gegebenenfalls oleophobiert ist,
    - gegebenenfalls eine wasserdampfdurchlässige, zumindest im wesentlichen gas-, insbesondere luftundurchlässige Sperrschicht (7),
    - eine Adsorptionsschicht (4), umfassend eine erste Aktivkohleschicht (5) mit korn- und/oder kugelförmiger Aktivkohle und eine zweite Aktivkohleschicht (6) mit Aktivkohlefasern,
- eine zweite, vorzugsweise textile Schicht (3).

17. Adsorptionsfiltermaterial nach einem der vorangehenden Ansprüche, **dadurch gekennzeichnet, daß** das Adsorptionsfiltermaterial (1) waschbar und/oder dekontaminierbar und/oder regenerierbar ausgebildet ist und/oder daß das Adsorptionsfiltermaterial (1) thermisch stabil ist, insbesondere bis zu Temperaturen von 100 °C oder mehr, vorzugsweise bis zu Temperaturen von 150 °C oder mehr.

18. Verwendung eines Adsorptionsfiltermaterials nach einem der Ansprüche 1 bis 17 zur Herstellung von Schutzmaterialien aller Art, insbesondere von Schutzanzügen, insbesondere für den zivilen oder militärischen Bereich, von Schutzhandschuhen und von Schutzabdekkungen, vorzugsweise alle vorgenannten Schutzmaterialien für den ABC-Einsatz.

19. Verwendung eines Adsorptionsfiltermaterials nach einem der Ansprüche 1 bis 17 zur Herstellung von Filtern und Filtermaterialien aller Art, insbesondere zur Entfernung von Schad-, Geruchs- und Giftstoffen aller Art aus Luft- und/oder Gasströmen, wie Gasmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

20. Schutzmaterialien, insbesondere Schutzanzüge, Schutzhandschuhe und Schutzabdeckungen, hergestellt unter Verwendung eines Adsorptionsfiltermaterials nach einem der Ansprüche 1 bis 17 und/oder aufweisend ein Adsorptionsfiltermaterial nach einem der Ansprüche 1 bis 17.

21. Verfahren zur Verbesserung des Durchbruchverhalten eines Adsorptionsfiltermaterials (1) mit einer ersten Schicht (2), einer zweiten Schicht (3) und einer zwischen der ersten Schicht (2) und der zweiten Schicht (3) angeordneten Adsorptionsschicht (4), **dadurch gekennzeichnet, daß** für die Ausbildung der Adsorptionsschicht (4) eine Kombination von korn- und/oder kugelförmiger Aktivkohle einerseits und Aktivkohlefasern andererseits verwendet wird, wobei die korn- und/oder kugelförmige Aktivkohle einerseits und die Aktivkohlefasern andererseits in getrennten, jedoch unmittelbar aneinander angrenzenden Aktivkohleschichten (5, 6) vorliegen.

**Claims**

1. Adsorption filter material (1), in particular for the production of protective materials such as NBC protection suits, having a first layer (2), a second layer (3), and an adsorption layer (4) arranged between the first layer (2) and the second layer (3), whereby the adsorption layer (4) has a first active charcoal layer (5) with granular or spherical active charcoal, **characterised in that** the adsorption layer (4) additionally has a second active charcoal layer (6) with active charcoal fibres, whereby the second active charcoal layer (6) is provided as a textile active charcoal structure, and whereby the first active charcoal layer (5) and the second active charcoal layer (6) are directly adjacent to one another and/or one is arranged directly on top of the other.

2. Adsorption filter material according to claim 1, **characterised in that** the granular or spherical active charcoal is produced by carbonisation and subsequent activation of suitable organic raw materials in granular or spherical form, in particular suitable polymers such as polystyrene cross-linked with divinylbenzene, in particular in the form of ion exchangers or their precursor stages, or of pitches, and/or that the granular and/or spherical active charcoal particles have mean particle diameters of 0.05 to 1 mm, in particular 0.1 to 0.8 mm, preferably 0.1 to 0.6 mm, and/or that the granular and or spherical active charcoal particles have a specific inner surface area (BET) of at least 800 m2/g, in particular at least 900 m2/g, preferably in the range of 800 to 1500 m2/g.

3. Adsorption filter material according to claim 1 or 2, **characterised in that** the active charcoal fibres are produced by carbonising and subsequently activating organic base fibres, in particular cellulose fibres, cellulose derivative-based fibres, phenol resin fibres, polyvinyl alcohol fibres, pitch fibres, acrylic resin fibres, polyacrylonitrile fibres, aromatic polyamide fibres, formaldehyde resin fibres, polystyrene fibres cross-linked with divinylbenzene, lignine fibres, cotton fibres, and/or hemp fibres, preferably cellulose- and cellulose derivative-based fibres, and/or that the textile active charcoal structure has a grammage of 10 to 200 g/m2, in particular 10 to 150 g/m2, preferably 10 to 120 g/m2, more preferably 20 to 100 g/m2, most preferably 25 to 80 g/m2.

4. Adsorption filter material according to any of the foregoing claims, **characterised in that** the active charcoal fibres have mean fibre diameters of 1 to 25 $\mu$m, in particular 2.5 to 20 $\mu$m, preferably 5 to 15 $\mu$m, and/or that the active charcoal fibres have a mass by length (titre) of 1 to 10 dtex, in particular 1 to 5 dtex.

5. Adsorption filter material according to any of the foregoing claims, **characterised in that** the mean particle diameter of the granular and/or spherical active charcoal particles is at least triple, in particular at least the quadruple, preferably at least the quadruple, more preferably at least the sextuple of the median fibre diameter of the active charcoal fibres.

6. Adsorption filter material according to any of the foregoing claims, **characterised in that** the total amount of active charcoal relative to the adsorption filter material (1) is 25 to 300 g/m2, in particular 30 to 250 g/m2, preferably 50 to 250 g/m2, more preferably 60 to 220 g/m2.

7. Adsorption filter material according to any of the foregoing claims, **characterised in that** the first active charcoal layer (5) and the second active charcoal layer (6) are permanently connected, in particular adhered to one another, and/or that the first active charcoal layer (5) and the second active charcoal layer (5) form a composite.

8. Adsorption filter material according to any of the foregoing claims, **characterised in that** the granular and/or spherical active charcoal and/or the active charcoal fibres are impregnated with at least one catalyst, in particular whereby the catalyst may be selected from metals and metallic compounds, preferably from the group of copper, cadmium, silver, platinum, palladium, zinc, and mercury and their compounds, and/or in particular whereby the amount of the catalyst relative to the impregnated active charcoal material is 0.01 to 15 % by weight, in particular 0.05 to 12 % by weight, preferably 5 to 12 % by weight.

9. Adsorption filter material according to any of the foregoing claims, **characterised in that** the first layer (2) and/or the second layer (3) is formed as a preferably air-permeable textile material, in particular as a textile fabric, preferably as a woven fabric, mesh, knit, non-woven fabric, fleece, felt, or other composite textile material, in particular whereby the textile material has a grammage of 50 to 300 g/m2, in particular 75 to 250 g/m2, preferably 90 to 175 g/m2, and/or **in that** the first layer (2) and/or the second layer (3) are oleophobed.

10. Adsorption filter material according to any of the foregoing claims, **characterised in that** the adsorption filter material (1) is formed as a multi-layer, in particular air-permeable composite material of several connected layers (2, 3, 4, 5, 6), and/or that the individual layers (2, 3, 4, 5, 6) of the adsorption filter material (1) are respectively connected with one another, in particularly seamlessly, preferably by adhesion, in particular whereby the adhesive is applied for permanent, seamless connection of two layers each in an amount of 5 to 100 g/m2, in particular 5 to 75 g/m2, preferably 10 to 50 g/m2.

11. Adsorption filter material according to any of the foregoing claims, **characterised in that** the adsorption filter material (1) has a total grammage relative to the adsorption filter material (1) of 75 to 1000 g/m2, in particular 100 to 800 g/m2, preferably 125 to 500 g/m2, and/or that the adsorption filter material (1) is gas-permeable, in particular air-permeable, in particular whereby the gas or air permeability of the adsorption filter material (1) is greater than $50 \, l.m^{-2}.s^{-1}$, in particular more than $100 \, 1.m^{-2}.s^{-1}$, preferably more than $200 \, l.m^{-2}.s^{-1}$, and up to $10,000 \, l.m^{-2}.s^{-1}$, and/or that the adsorption filter material (1) has a water vapour permeation rate of at least 5 l/m2 per 24 h, in particular at least 10 l/m2 per 24 h, preferably at least 12 l/m2 per 24 h.

12. Adsorption filter material according to any of the foregoing claims, **characterised in that**, between the first layer (2) and the adsorption layer (4), and/or between the second layer (3) and the adsorption layer (4), at least one barrier layer (7) is provided, in particular whereby the barrier layer (7) is permeable to water vapour and/or at least substantially impermeable to gas, in particular impermeable to air, and/or in particular whereby the barrier layer (7) is at least substantially impermeable to chemical poisons, in particular chemical weapons, such as dermatotoxins or contact toxins, or at least slows their permeation and/or in particular whereby the barrier layer (7) is at least substantially impermeable to liquids, in particular water, and/or to aerosols, or at least slows their permeation.

13. Adsorption filter material according to claim 12, **characterised in that** the barrier layer (7) simultaneously serves as an adhesive interface for the adsorption layer (4), and/or that the barrier layer (7) is applied to the first layer (2) and/or the second layer (3) as a continuous, closed layer, and/or that the thickness of the barrier layer (7) is 1 to 1,000 $\mu$m, in particular 1 to 500 $\mu$m, preferably 5 to 250 $\mu$m, more preferably 5 to 150 $\mu$m, even more preferably 10 to 100 $\mu$m, and most preferably 10 to 50 $\mu$m.

14. Adsorption filter material according to claim 12 or 13, **characterised in that** the barrier layer (7) comprises or consists of at least one plastic or at least one organic polymer, preferably a polyurethane- and/or polyurethane derivative- and/or cellulose and/or cellulose derivative-based polymer, and/or a polymer based, if applicable, on modified or derivatised polyesters or polyamides, and/or that the barrier layer (7) is formed as a multi-layer laminate and/or a multi-layer composite of several plastic or polymer layers, in particular of at least three connected layers or plies, and/or that the barrier layer (7) has a permeability to water vapour at 25 °C of at least 20 1/m2 per 24 h at a thickness of 50 $\mu$m.

**15.** Adsorption filter material according to any of claims 12 to 14, **characterised in that** the adsorption filter material (1) having the barrier layer (7) has an overall water vapour permeability of at least 10 l/m2 per 24 h, in particular at least 15 l/m2 per 24 h, preferably at least 20 l/m2 per 24 h, at a barrier layer (7) thickness of 50 $\mu$m.

**16.** Adsorption filter material according to any of the foregoing claims, **characterised in that** it is formed as a composite material with several, directly adjacent, connected layers (2, 3, 4, 5, 6), in particular whereby the adsorption filter material (1) comprises these layers in the following sequence:

- a first, preferably textile layer (2), oleophobed, if applicable,
- if applicable, a barrier layer (7) that is permeable to water vapour and at least substantially impermeable to gas, in particular to air,
- an adsorption layer (4), comprising a first active charcoal layer (5) with granular and/or spherical active charcoal and a second active charcoal layer (6) with active charcoal fibres,
- a second, preferably textile layer (3).

**17.** Adsorption filter material according to any of the foregoing claims, **characterised in that** the adsorption filter material (1) is washable and/or decontaminable and/or regenerable and/or that the adsorption filter material (1) is thermally stable, in particular up to temperatures of 100 °C or more, preferably up to temperatures of 150 °C or more.

**18.** Use of an adsorption filter material according to any of claims 1 to 17 for the production of protective materials of all kinds, in particular protective suits, in particular for civilian or military use, of protective gloves and protective covers, preferably all of the aforementioned protective materials for use with NBC substances.

**19.** Use of an adsorption filter material according to claim 1 to 17 to produce filters and filter materials of all kinds, in particular for the removal of pollutants, odorants, and toxins of all kinds from air and/or gas flows, such as gas mask filters, odour filters, surface filters, air filters, in particular filters for indoor air purification, adsorbent carrier structures, and filters for medical use.

**20.** Protective materials, in particular protective suits, protective gloves, and protective covers, produced using an adsorption filter material according to any of claims 1 to 17 and/or having an adsorption filter material according to any of claims 1 to 17.

**21.** Method for improving the breakthrough behaviour of an adsorption filter material (1) having a first layer (2), a second layer (3), and an adsorption layer (4) arranged between the first layer (2) and the second layer (3), **characterised in that**, to form the adsorption layer (4),on the one hand a combination of granular and/or spherical active charcoal and on the other hand active charcoal fibres are used, whereby the granular and/or spherical active charcoal and the active charcoal fibres are present in separate, but directly adjacent active charcoal layers (5, 6).

**Revendications**

**1.** Matériau de filtre à adsorption (1), en particulier pour fabriquer des matériaux de protection tels des combinaisons de protection contre les agressions ABC, avec une première couche (2), une deuxième couche (3), et une couche d'adsorption (4) disposée entre la première couche (2) et la deuxième couche (3), la couche d'adsorption (4) comportant une première couche de charbon actif (5), avec du charbon actif en forme de grains et/ou de sphères, **caractérisé en ce que** la couche d'adsorption (4) comporte en plus une deuxième couche de charbon actif (6) avec des fibres de charbon actif, la deuxième couche de charbon actif (6) se présentant comme construction textile de fibres de charbon actif et la première couche de charbon actif (5) et la deuxième couche de charbon actif (6) étant directement contiguës et/ou étant disposées directement l'une au-dessus de l'autre.

**2.** Matériau de filtre à adsorption selon la revendication 1, **caractérisé en ce que** le charbon actif en forme de grains et/ou de sphères est produit par carbonisation, suivie d'une activation, de matériaux organiques appropriés en forme de grains et/ou de sphères, en particulier de polymères appropriés, comme du polystyrène réticulé par du divinyle benzène, en particulier sous la forme d'échangeurs d'ions ou de leurs précurseurs, ou encore de poix, et/ou **en ce que** les particules de charbon actif en forme de grains et/ou de sphères présentent des tailles moyennes de particule de 0,05 à 1 mm, en particulier de 0,1 à 0,8 mm, de préférence de 0,1 à 0,6 mm, et/ou **en ce que** les particules de charbon actif en forme de grains et/ou de sphères présentent une surface spécifique intérieure (BET) d'au moins 800 m$^2$/g, en particulier d'au moins 900 m$^2$/g, de préférence dans l'intervalle de 800 m$^2$/g à 1500 m$^2$/g.

**3.** Matériau de filtre à adsorption selon la revendication 1 ou 2, **caractérisé en ce que** les fibres de charbon actif sont fabriquées par carbonisation, suivie d'une activation, de fibres organiques de départ appropriées, en particulier de fibres cellulosiques, de fibres à base de dérivés de la cellulose, de fibres de résines phénoliques, de fibres d'alcools polyvinyliques, de fibres de poix, de fibres de résines acryliques, de fibres de polyacrylonitrile, de fibres de polyamides aromatiques, de fibres de résines de formaldéhyde, de fibres de polystyrène réticulé au divinyle benzène, de fibres de lignine, de fibres de coton et/ou de fibres de chanvre, de préférence de fibres à base de cellulose ou de dérivés de cellulose et/ou **en ce que** la construction textile de fibres de charbon actif présente un poids surfacique de 10 à 200 g/m², en particulier de 10 à 150 g/m², de préférence de 10 à 120 m²/g, encore plus préférablement de 20 à 100 m²/g, de façon particulièrement préférée de 25 à 80 m²/g.

4. Matériau de filtre à adsorption selon l'une quelconque des revendications précédentes, **caractérisé en ce que** les fibres de charbon actif présentent un diamètre de fibre moyen de 1 à 25 $\mu$m, en particulier de 2,5 à 20 $\mu$m, de préférence de 5 à 15 $\mu$m, et/ou **en ce que** les fibres de charbon actif présentent une masse par unité de longueur (titre) de 1 à 10 dtex, en particulier de 1 à 5 dtex.

5. Matériau de filtre à adsorption selon l'une quelconque des revendications précédentes, **caractérisé en ce que** la taille moyenne de particule des particules de charbon actif en forme de grains et/ou de sphères est au moins trois fois, en particulier au moins quatre fois, de préférence au moins cinq fois, de façon particulièrement préférée au moins six fois plus grande que le diamètre de fibre moyen des fibres de charbon actif.

6. Matériau de filtre à adsorption selon l'une quelconque des revendications précédentes, **caractérisé en ce que** la quantité totale de charbon actif, rapportée au matériau de filtre à adsorption (1), est de 25 à 300 g/m², en particulier de 30 à 250 g/m², de préférence de 50 à 250 g/m², de façon particulièrement préférée de 60 à 220 g/m².

7. Matériau de filtre à adsorption selon l'une quelconque des revendications précédentes, **caractérisé en ce que** la première couche de charbon actif (5) et la deuxième couche de charbon actif (6) sont reliées ensemble à demeure, en particulier collées et/ou **en ce que** la première couche de charbon actif (5) et la deuxième couche de charbon actif (6) forment un composite.

8. Matériau de filtre à adsorption selon l'une quelconque des revendications précédentes, **caractérisé en ce que** le charbon actif en forme de grains et/ou de sphères et/ou les fibres de charbon actif sont imprégnés d'au moins un catalyseur, en particulier **en ce que** le catalyseur peut être choisi parmi des métaux et des composés métalliques, de préférence du groupe du cuivre, du cadmium, de l'argent, du platine, du palladium, du zinc et du mercure, de même que de leurs composés, et/ou en particulier en ce que la quantité de catalyseur, rapportée au matériau de charbon actif imprégné, est de 0,01 à 15 % en poids, en particulier de 0,05 à 12 % en poids, de préférence de 5 à 12 % en poids.

9. Matériau de filtre à adsorption selon l'une quelconque des revendications précédentes, **caractérisé en ce que** la première couche (2) et/ou la deuxième couche (3) sont réalisées comme matériaux textiles relativement perméables à l'air, en particulier comme objets textiles bidimensionnels, de préférence comme tissus, comme tricots, comme ensemble de fils parallèles non tissés, comme ensembles de fils en vrac, comme non-tissés, comme feutres ou comme autres textiles composites, en particulier **en ce que** le matériau textile présente un poids surfacique de 50 à 300 g/m², en particulier de 75 à 250 g/m², de préférence de 90 à 175 g/m², et/ou **en ce que** la première couche (2) et/ou la deuxième couche (3) sont traitées oléophobes.

10. Matériau de filtre à adsorption selon l'une quelconque des revendications précédentes, **caractérisé en ce que** le matériau de filtre à adsorption (1) est configuré comme matériau composite multicouche, en particulier perméable à l'air, en plusieurs couches (2, 3, 4, 5, 6) reliées respectivement ensemble, et/ou **en ce que** les différentes couches (2, 3, 4, 5, 6) du matériau de filtre à adsorption (1) sont respectivement reliées ensemble, en particulier sans couture, de préférence par collage, en particulier **en ce que** l'application de colle pour l'assemblage permanent et sans couture de deux couches respectivement s'effectue en une quantité de 5 à 100 g/m², en particulier de 5 à 75 g/m², de préférence de 10 à 50 g/m².

11. Matériau de filtre à adsorption selon l'une quelconque des revendications précédentes, **caractérisé en ce que** le matériau de filtre à adsorption (1) présente un poids surfacique total, rapporté au matériau de filtre à adsorption (1), de 75 à 1000 g/m², en particulier de 100 à 800 g/m², de préférence de 125 à 500 g/m², et/ou **en ce que** le matériau de filtre à adsorption (1) est perméable aux gaz, en particulier à l'air, en particulier **en ce que** la perméabilité aux gaz, respectivement à l'air, du matériau de filtre à adsorption (1) est de plus de 50 $l \cdot m^{-2} \cdot s^{-1}$, en particulier de plus de 100 $l \cdot m^{-2} \cdot s^{-1}$, de préférence de plus de 200 $l \cdot m^{-2} \cdot s^{-1}$, et jusqu'à 10.000 $l \cdot m^{-2} \cdot s^{-1}$ et/ou **en ce que** le matériau de filtre à adsorption (1) présente un taux de traversée de vapeur d'eau d'au moins 5 l/m² par 24 h, en particulier d'au moins 10 l/m² par 24 h, de préférence d'au moins 12 l/m² par 24 h.

12. Matériau de filtre à adsorption selon l'une quelconque des revendications précédentes, **caractérisé**

**en ce qu'**entre la première couche (2) et la couche d'adsorption (4) et/ou entre la deuxième couche (3) et la couche d'adsorption (4) est prévue en plus au moins une couche barrière (7), en particulier **en ce que** la couche barrière (7) est configurée perméable à la vapeur d'eau et/ou au moins sensiblement imperméable aux gaz, en particulier à l'air et/ou **en ce que** la couche barrière (7) est au moins sensiblement imperméable en particulier concernant les poisons chimiques, en particulier les armes chimiques comme les vésicants et les insecticides de contact, ou alors ralentit au moins leur passage et/ou **en ce qu'**en particulier la couche barrière (7) est au moins sensiblement imperméable aux liquides, en particulier à l'eau, et/ou aux aérosols ou ralentit au moins leur passage.

13. Matériau de filtre à adsorption selon la revendication 12, **caractérisé en ce que** la couche barrière (7) sert en même temps de matière d'adhérence pour la couche d'adsorption (4) et/ou **en ce que** la couche barrière (7) est appliquée comme couche continue fermée sur la première couche (2) et/ou sur la deuxième couche (3), et/ou **en ce que** l'épaisseur de la couche barrière (7) est de 1 à 1000 $\mu$m, en particulier de 1 à 500 $\mu$m, de préférence de 5 à 250 $\mu$m, plus préférablement de 5 à 150 $\mu$m, encore plus préférablement de 10 à 100 $\mu$m, de façon particulièrement préférée de 10 à 50 $\mu$m.

14. Matériau de filtre à adsorption selon la revendication 12 ou 13, **caractérisé en ce que** la couche barrière (7) comprend au moins ou consiste en un plastique ou au moins un polymère organique, de préférence un polymère à base de polyuréthane et/ou de dérivés du polyuréthane, et/ou à base de cellulose et/ou de dérivés de cellulose et/ou à base de polyesters ou de polyamides, le cas échéant modifiés ou sous forme de dérivés, et/ou **en ce que** la couche barrière (7) est configurée comme un composite multicouche en plusieurs couches de plastique ou de polymère, en particulier en au moins trois couches ou strates reliées ensemble, et/ou **en ce que** la couche barrière (7) présente à 25 °C une perméabilité à la vapeur d'eau d'au moins 20 l/m$^2$ par 24 h pour une épaisseur de 50 $\mu$m.

15. Matériau de filtre à adsorption selon l'une quelconque des revendications 12 à 14, **caractérisé en ce que** le matériau de filtre à adsorption (1) doté de la couche barrière (7) présente en tout une perméabilité à la vapeur d'eau d'au moins 10 l/m$^2$ par 24 h, en particulier d'au moins 15 l/m$^2$ par 24 h, de préférence d'au moins 20 l/m$^2$ par 24 h, pour une épaisseur de la couche barrière (7) de 50 $\mu$m.

16. Matériau de filtre à adsorption selon l'une quelconque des revendications précédentes, **caractérisé en ce qu'**il est configuré comme matériau composite avec plusieurs couches successives respectivement reliées ensemble (2, 3, 4, 5, 6), en particulier **en ce que** le matériau de filtre à adsorption (1) comprend ces couches dans l'ordre (séquence) suivant :

    - une première couche, de préférence textile (2), qui est le cas échéant traitée oléophobe,
    - le cas échéant une couche barrière (7) perméable à la vapeur d'eau, au moins sensiblement imperméable aux gaz, en particulier à l'air,
    - une couche d'adsorption (4), comprenant une première couche de charbon actif (5) avec du charbon actif en forme de grains ou de sphères, et une deuxième couche de charbon actif (6) avec des fibres de charbon actif,
    - une deuxième couche (3), de préférence textile.

17. Matériau de filtre à adsorption selon l'une quelconque des revendications précédentes, **caractérisé en ce que** le matériau de filtre à adsorption (1) est configuré pour être lavable et/ou décontaminable et/ou régénérable, et/ou **en ce que** le matériau de filtre à adsorption (1) est thermiquement stable, en particulier jusqu'à des températures de 100 °C ou plus, de préférence jusqu'à des températures de 150 °C ou plus.

18. Utilisation d'un matériau de filtre à adsorption selon l'une quelconque des revendications 1 à 17 à la fabrication de matériaux de protection de toute sorte, en particulier de combinaisons de protection, en particulier pour le secteur civil et militaire, de gants de protection et de recouvrements de protection, de préférence tous les matériaux de protection susmentionnés pour l'emploi dans le secteur ABC.

19. Utilisation d'un matériau de filtre à adsorption selon l'une quelconque des revendications 1 à 17 à la fabrication de filtres et de matériaux filtrants de toute sorte, en particulier pour l'élimination de substances nocives, malodorantes et toxiques de l'air et/ou de courants de gaz, comme des filtres de masques à gaz, des filtres d'odeurs, des filtres plats, des filtres d'air, en particulier des filtres pour l'épuration de l'air des locaux, des structures supports adsorbantes et des filtres pour le secteur médical.

20. Matériaux de protection, en particulier combinaisons de protection, gants de protection et recouvrements de protection, fabriqués moyennant l'utilisation d'un matériau de filtre à adsorption selon l'une quelconque des revendications 1 à 17 et/ou comportant un matériau de filtre à adsorption selon l'une quelconque des revendications 1 à 17.

21. Procédé d'amélioration du comportement de traversée d'un matériau de filtre à adsorption (1), avec une première couche (2), une deuxième couche (3) et une couche d'adsorption (4) disposée entre la première couche (2) et la deuxième couche (3), **caractérisé en ce que** pour la formation de la couche d'adsorption (4) sont utilisées une combinaison de charbon actif, d'une part en forme de grains et/ou de sphères, et d'autre part de fibres de charbon actif, le charbon actif en forme de grains et/ou de sphères d'une part et les fibres de charbon actif d'autre part se présentant dans des couches de charbon actif (5, 6) séparées, mais directement contiguës.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4904343 A
- EP 0090072 A2
- EP 0118618 A1
- DE 19519869 C2
- WO 0183368 A1
- DE 19519869 A1
- GB 1310011 A
- DE 3339756 C2
- WO 0170372 A1
- EP 0966558 A2
- DE 69809718 T2